# EUROPEAN PATENT APPLICATION

(11) **EP 4 154 718 A1**
(43) Date of publication of application: **29.03.2023**
(21) Application number: 22190476.6
(22) Date of filing: 16.08.2022
(51) Int. Cl.: A21D 8/02, A21D 8/06, A21D 8/08, A21D 13/14, A21D 13/32, A21D 13/33, A23P 20/25, A23P 30/10

(54) **NEW PRODUCTION METHOD FOR BAKERY PRODUCTS WITH POST-BAKING FILLING INJECTION**

(30) Priority: 28.09.2021 TR 202115100
(71) Applicant: Eti Gida Sanayi Ve Ticaret Anonim Sirketi, Odunpazari/Eskisehir (TR)
(72) Inventor: KARANFIL, ABDULLAH, Eskisehir (TR); GÖRGÜLÜ, AHMET, Eskisehir (TR)
(74) Representative: Yamankaradeniz, Kemal

(57) **Abstract**

In the method subject to the invention, the bottom and top layers of bakery products can be baked with the help of a mold and by that way geometrically identical and equal gapped products can be produced. Since the invention is based on the principle of pre-baking assembly of two different doughs, higher-quality multi-component products can be produced by adding fillings, which are not affected by heat, before and after baking, so that large particles are fully closed into the bakery products that cannot be made in the prior art.

## Description

### Technical field to which the invention belongs

The invention relates to new production method for soft-centered bakery products such as crackers and biscuits, wherein, fillings are injected after baking into the bakery products of which the lower and top layers are stamped each other before baking and baked with the help of a mold (pan).

### Prior Art

The fillings of the filled bakery products are mostly put together with the dough before baking and subjected to heat effect (baked) together. In some applications, sandwich products, wafers, products such as ravioli, filled roll wafers, filled sticks, and filled extruded products etc., which can be an alternative to filled (soft centered bakery products) as semi or fully closed bakery products, can be given as examples to said filled bakery products. There are few applications where fillings can be inject after baking into the hole which is occurred during baking.

In the prior art, as a result of baking by placing the filling in a fully closed dough before baking, the filling is affected by the heat, and the structure and quality deteriorate. Due to water content, water-based fillings boil, lose moisture, harden and decrease in quantity due to loss of moisture in the final product. In order to prevent boiling and moisture loss, additional inputs such as water-binding fibers are entered into the filling. These inputs adversely affect the filling and product quality, cause hardening during the shelf life and bring additional costs. In oil-based fillings, the quality of the filling is adversely affected due to the decomposition of the input components, melting of oil and infusion with the bakery product, the melting of sugar and forming crystallization in the boundary layer, the structural deterioration of components such as milk powder, whey powder due to heat. In addition, this problem is tried to be reduced by methods such as cooling the filling before baking in order to prevent heat and quality deterioration, low-temperature-long-time or high-temperature-short time baking, which adversely affects the quality of the final product. As a result, fillings that are not exposed to heat treatment cause losses in energy and product quality by being exposed to high temperatures (150-270°C) and heat transfer (heating unnecessarily), depending on the product type, due to the limitations of existing methods.

### Technical problems that the invention intended to solve

Special special methods must be used in order to create a gap for the filling injection before/after baking in the bakery product. It is also not possible to create these gaps with 100% equal volume and 100% accuracy. For this reason, the amount of filling injection into the products after baking remains at low rates (maximum 65% by weight). With this invention, since all the fillings are injected after baking to closed cavity of the bakery product, the defects in the prior art are completely eliminated.

### Description of invention

Thanks to the new method subjected to the invention, cavities inside the products are formed in a high rate by using different baking bottom-molds(trays) suitable for product geometry, crust and cover dough method and high filling can be provided with completely equal volume and accuracy.

### Description of shapes

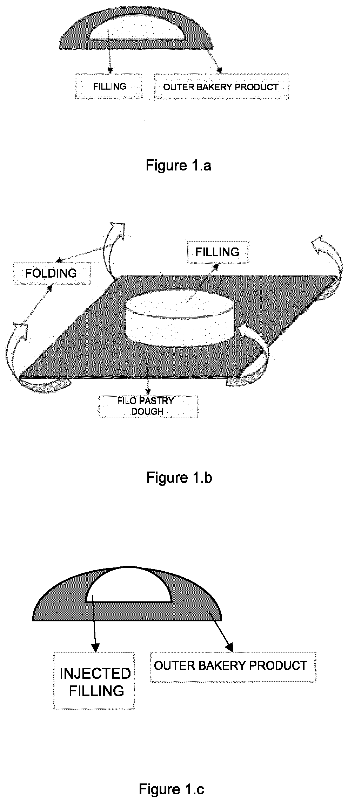

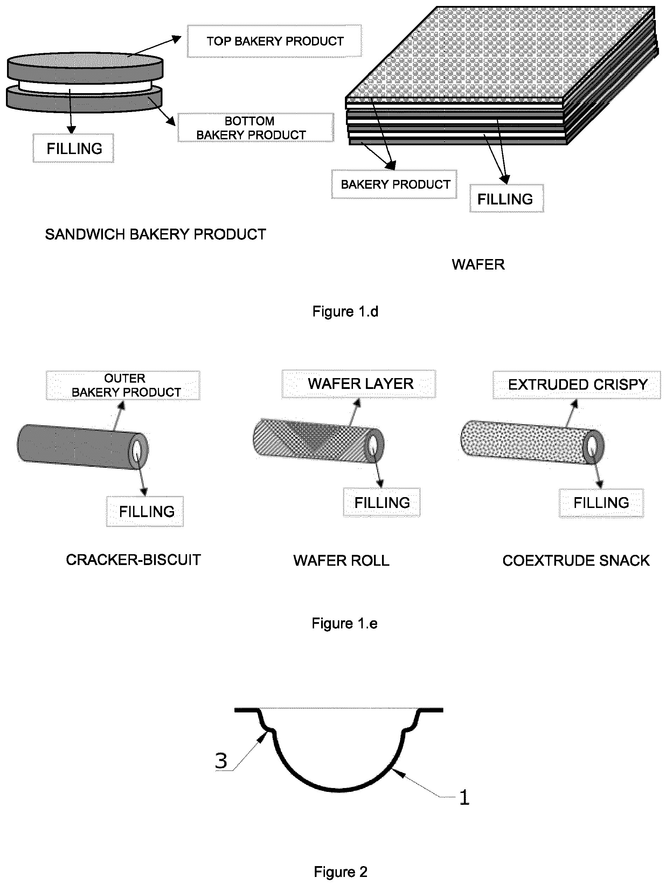

**Figure 1****.a:** The method in which the bakery and filling are baked together (soft-centered products)
**Figure 1****.b:** Products formed by placing filling before baking in bakery products that have been turned into filo pastry
**Figure 1****.c:** Bakery products that can be injected with fillings after bakeing
**Figure 1****.d:** Sandwiches (such as biscuits, crackers), bakery products and wafer products made using non-flowing fillings after baking
**Figure 1****.e:** Coextruded products that can be filled in the final stage of baking (low pressure coextruder (cracker-biscuit), roll wafer, high pressure coextruder (coextrude snack))
**Figure 2****:**Mold design in which the baking mold and the top dough can be mounted to form the cavity
**Figure 3****:** The bottom mold, in which the bottom dough is shaped and baked, and the top mold, which shapes the dough placed in the bottom mold
**Figure 4****:** Spraying mold release agents
**Figure 5****:** Putting dough in the bottom mold
**Figure 6****:** Homogeneous plastering of the dough deposited in the mold
**Figure 7****:** Shaping the dough as a crust
**Figure 8****:** Placing particles and fillings in the bottom mold before baking
**Figure 9****:** Applying and bonding the top cover dough on the dough plastered on the bottom mold
**Figure 10****:**Post-baked filling injection into the baked bottom and top dough gap
**Figure 11****:** Removal of the finished product from the mold and the final product
**Figure 12****:** Filling injection flow chart after baking
**Figure 13****:** Particle-filling application before and after baking

### Reference descriptions

**(1)** Bottom molds
**(2)** Top molds
**(3)** Mold design (design with special stopper)
**(4)** Dough portioned to bottom-mold (bakery product)
**(5)** Full closure of the top mold and bottom dough with gaps on the top mold surface
**(6)** Heaters placed inside the top mold
**(7)** Design of the top mold
**(8)** Inner gap volume (mold gap formed during baking, air)
**(9)** Special injectors (needles)
**(10)** Filling
**(11)** Mold releases
**(12)** Spraying
**(13)** Fillings and particles
**(14)** Bonding the top dough
**(15)** Shaping the top dough
**(16)** Mold (tray)
**(17)** Final product

### Detailed description of the invention:

Examples of alternative products in the prior art are given in Figures 1.a, 1.b, 1.c, 1.d and 1.e.

The method by which the bakery product and fillings are baked together is shown in Figure 1.a, products formed by placing filling before baking in bakery products that have been turned into folded pastry shown in Figure 1.b, bakery products with injectable filling after baking are shown in Figure 1.c, sandwich products such as biscuits, crackers and wafers made using non-flowing (viscous) fillings after baking are shown in Figure 1.d, coextruded products (low pressure coextruder, wafer roll, high pressure coextruder) that can be filled at the final stage of baking are shown in Figure 1.e.

In the new method, which is the subject of the invention, by using different baking bottom molds (1), crust and cover dough method suitable for the product geometry, a high rate of product inner cavity can be formed and high filling (up to 60% by volume; up to 125% by weight) 100% equal volume and 100% can be created with accuracy. In Figure 2, the example of the baking mold belongs to invention and the mold design detail (3) where the top dough can be mounted to form the gap is given. In this method, since the bottom and top layers of the bakery product, which are produced as thin-walled, closed and hollow, are baked with the help of a mold (in a pan), products which are geometrically identical and with equal cavities can be produced. The effects of the ingredients of the bakery product, the raising agents and the baking conditions are no longer important. Since the invention is based on the principle of pre-baking two different doughs, it is possible to produce multi-component, higher quality products by adding fillings and particles that are not affected by heat before baking and when desired by adding fillings after baking, in a way that large particles are completely enclosed in the bakery product, which cannot be done in the prior art. It is also possible to make the product highly filled by injecting sensitive fillings that are affected by heat after baking.

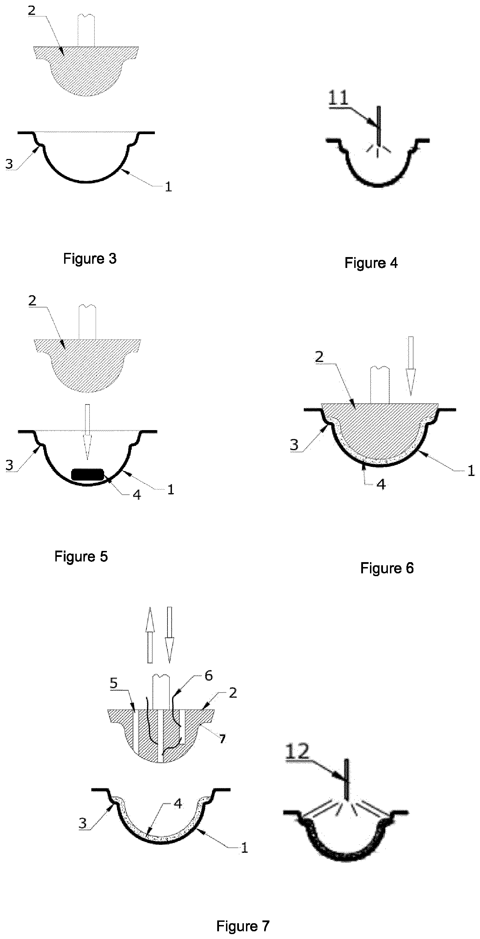

In Figure 3, the bottom mold (1), in which the bottom dough is shaped and baked, and the top mold (2), which shapes the dough placed in the bottom mold, are given. In this way, it is ensured that the product is produced with equal geometry and filling cavity. The bottom mold (1) has been shaped multiple times by rolling method from sheet as an alloy of steel or aluminum with a thickness of 1.4 mm to 4 mm, and the side of the bottom mold (1) facing the top mold (2) is also taken into account after baking, taking into account the adhesive property of the bakery product's component properties for easy removal from the mold; coated with a layer of PTFE (Teflon), silicone, titanium, hard chrome or glass ceramic. The mold design (3), design with special stopper on the top part of the bottom mold, is designed for proper sealing and sealing of the top dough layer into the cavity.

In order to prevent the dough from bonding to the mold after baking, mold releases (11) suitable for food are sprayed onto the bottom mold before the dough is shaped by placing it in the bottom mold (Figure 4).

The top mold (2) can be manufactured from plastic material suitable for food or metal materials coated with food-grade coating materials, depending on the type of dough, and can move with mechanisms (mechanical, robotic, pneumatic, hydraulic, servo etc.) that can move up and down to center the bottom mold (1) precisely. In Figure 5, the dough portioned to the bottom mold (4) is given. Dough; deposit, wire cutting, cutting from the filo pastry, removing from the mold eye, etc. are precisely placed in the mold cavity.

When the top mold sits in the full bottom mold, it smears the thin-walled bakery goods (4) deposited into the mold into the bottom mold. The dough deposited in the bottom mold (1) is precisely placed in a quantity that will fully cover the bottom mold surface and will not leave a gap, by various methods (wire cutting, extrusion, deposit, etc.). As a result of the force applied to the dough by moving the top mold (2) down to the surface of the bottom mold (1) of the dough (4), it is ensured that the dough (4) is plastered in a homogeneous thickness (0.5-4 mm). Figure 6 shows that after the dough deposit, the process of pressing the top mold towards the bottom mold and smearing the dough on the bottom mold surface.

After pressing the top mold (2) against surface of the bottom mold (1) to provide the desired dough thickness in a precise and homogeneous way, the top mold (2) moves up and separates from the bottom mold surface. Figure 7 shows schematically, shaping the dough in a homogeneous thickness and desired geometry by means of the top mold (2) and the bottom mold (1). During the separation of the top mold (2) from the bottom mold (1), the dough is prevented from deteriorating by bonding to the top mold (2), by blowing air through the holes (5) widely placed on the top mold surface. In addition, depending on the type of dough; if necessary, the top mold is heated with heaters (6) placed in the top mold (2) to prevent the dough from bonding to the top mold (2) in the part of the oil in the dough on the part that contacts the mold surface. Again, in order to bottom and top dough to bond uniformly to each other, a design that will ensure full adhesion and apply pressure to the adhesion area has been carried out in the design of the bottom (6) and top mold (7). After shaping the dough in the bottom mold (1), an additional water-based mixture is sprayed (12) to provide the vapour pressure in the gap (8) that will form the after baking gap and at the same time to seal the top dough (5) to the bottom dough (4).

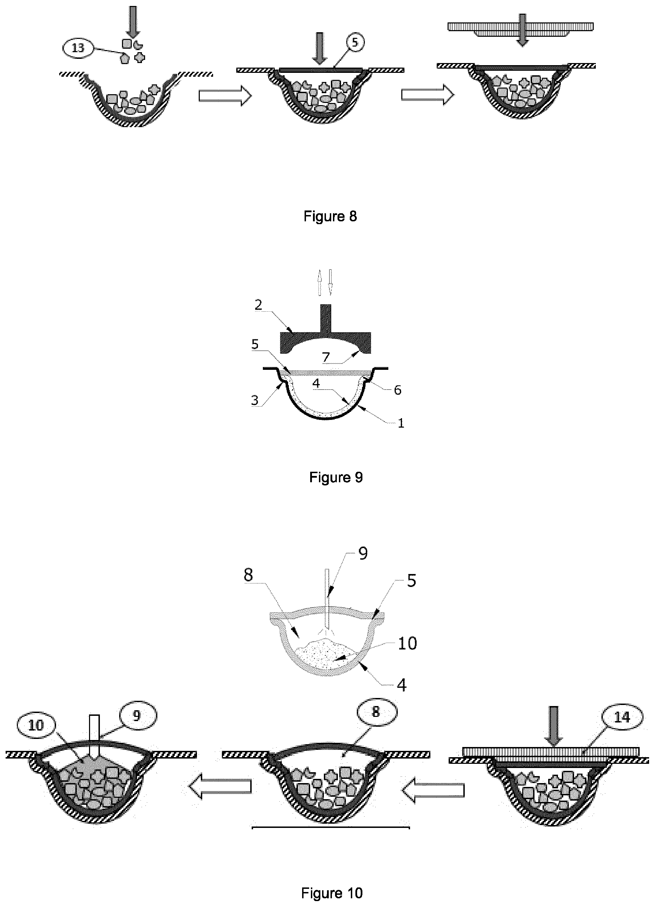

If desired for product variety and originality, fillings and particles (13) that are not affected by heat can be placed in the mold cavity before the top cover is closed. This alternative is schematically shown in Figure 8. Thus, it is ensured that particles can be placed in the gap before baking and closing the top cover. On the bottom mold (1), the previously rolled, appropriately cut (0.5-4 mm thick) top cover is placed in the stopper top part (3) of the dough (4) smeared by the top mold (2) by descending and formed by the geometries of the molds, by various methods (vacuum, needle, conveyor, etc.) and robots with precise positioning feature (5). When desired, this cover dough type can be different (cocoa, etc.) from the type of dough smeared in the mold. Adhesives containing solutions with sugar, eggs, starch, etc. can be applied to the adhesion area before the top cover is placed so that the cover bonds well to the bottom dough.

Figure 9 shows the application of the top cover dough on the dough smeared on the bottom mold and the bonding stage (joining the bottom dough and the top dough).

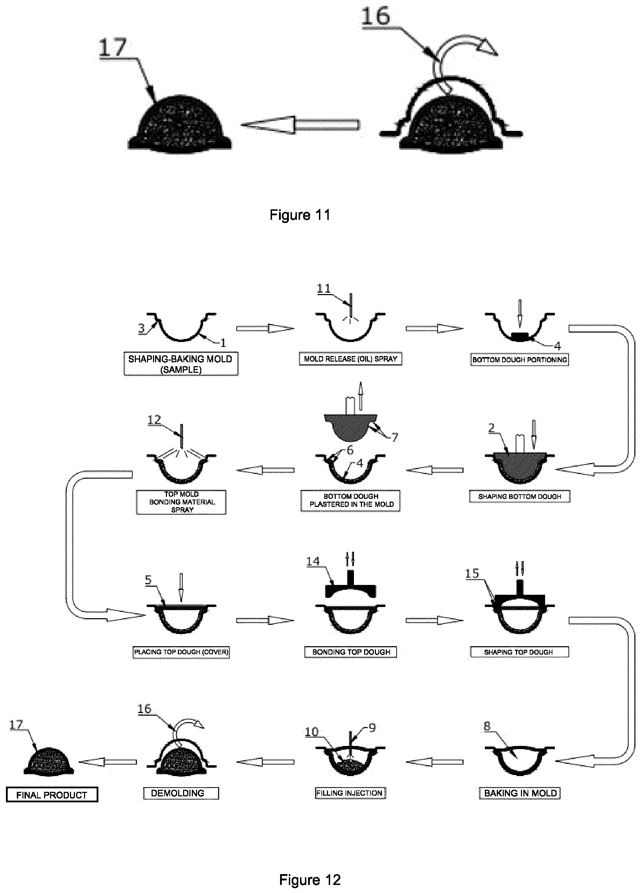

Figure 10 shows the injection stages of the post-baking filling (10) into the inner gap volume (8) formed during baking with special injectors (9) (with needles). With the full closure (5) of the top cover and bottom dough, the air (8) in the cavity during baking and the pressure created by the water vapor in the dough ensure uniformity of shape and the internal gap volume (8) is formed homogeneously. The doughs formed by the top and bottom covers and guaranteed inner gap are baked and after cooling the mold and dough temperature to a temperature where it cannot damage the filling, fillings (10) are made with needles (injectors) (9) in measuring geometry in accordance with product geometry and filling viscosity while the product is in the mold. The second filling can also be applied optionally after baking on the particles placed before baking or on the filling that can be baked. After the injection of the fillings and the cooling (30-55°C) with the mold with the stage of bonding (14) and the shaping (15) the top dough, the products are removed from the mold (16) and turned into the final product (17) by various methods (vacuum, needl, tilting etc. ejectors). Figure 11 shows the stages of demolding and final product.

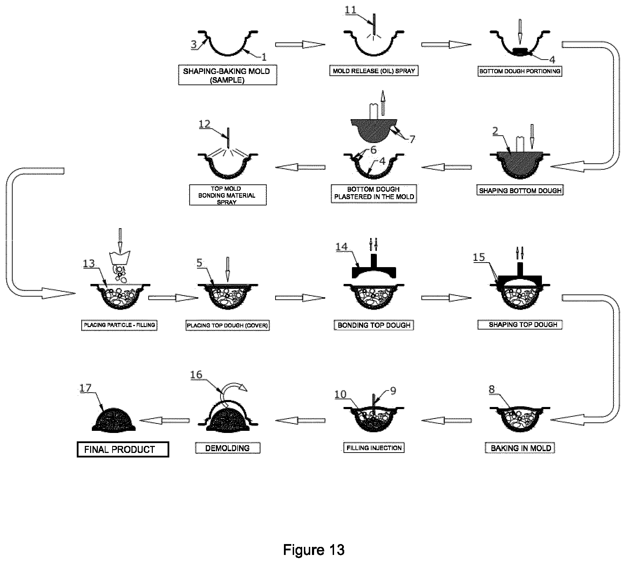

The post-baking filling injection flow chart is described in Figure 12. Figure 13 shows the flowchart of particle application before baking and/or filling injection into bakery product after baking.

0.5 mm to 4 mm, preferably 0.8 mm bottom dough is used in the mold so that the carrier container to trap the filling can function.

Again, in order to create a smooth and controlled filling gap, the top dough cover is also precisely assembled and bonded to the bottom dough in dimensions of 0.5-4 mm preferably 0.8 mm. Special design was carried out taking into account the changeability of product dimensions and the restriction of exiting from the mold in order to inject an equal amount of filling after baking to the bakery product (dough) for which the gap was formed in a controlled and uniform way. Mold material, coating material and soft radius geometries have been created that can make demolding easy.

In the injection of filling after baking into the bakery product gap formed in constant and equal volume; following filling features are used; filling viscosity 500-20.000 cP, preferably 5.000-15.000 cP, maximum filling amount 67% by volume, preferably 60%; 155% by weight, preferably 125%. It is possible to inject all kinds of water-based, oil-based, oil-water-based aerated and similar fluid fillings after baking without heat effect. A wide range of doughs such as biscuits, crackers and cookie dough are suitable for all injectable fillings whose quality is deteriorated by the effect of heat.

## Claims

1. A thin-walled, closed, hollow bakery product which is baked as a crust and **characterized by** baking in a mold (pan) in different geometries to provide controlled gap for the purpose of filling injection after baking.

2. A bakery product according to Claim 1, wherein it becomes filled with high amount by injection of sensitive fillings affected by heat after baking.

3. A bakery product according to Claim 1, wherein it is possible to inject all kinds of water-based, oil-based, oil-water-based aerated and similar fluid fillings after baking without heat effect.

4. A bakery product according to Claim 1, wherein it is possible to close the top cover by placing particles in the gap before closing the top cover before baking.

5. A bakery product according to Claim 1, wherein the dough (4) is smeared to the bottom mold(1) with a homogeneous thickness of 0.5 mm to 4 mm by applying force to the dough by moving down to the surface of the bottom mold(1) after the deposit.

6. A bakery product according to Claim 1, wherein the air blows through the holes (5) on the surface of the top mold(2) to prevent the dough(4) from deteriorating by bonding to the top mold during the separation of the top mold(2) from the bottom mold(1).

7. A bakery product according to Claim 1, wherein, if necessary, the top mold(2) is heated with heaters placed in the top mold (6) to prevent the dough from bonding to the mold in the part of the dough that contacts the mold surface.

8. A bakery product according to Claim 1, wherein the top dough cover is mounted with dimensions of 0.5 mm to 4 mm and bonded to the bottom dough.

9. A bakery product according to Claim 1, wherein, in post-baking filling injection, the filling viscosity is 500-20.000 cP, the amount of filling is no more than 67% by volume and is no more than 155% by weight.

10. A bakery product according to Claim 1, wherein it is produced by the following stages; the installation of the bottom mold(1) by closing it fully before baking to the top mold(2), injection (9) of coextruded fillings(10) into the mold cavity(8) formed after baking the dough(4), spraying the mold separators (11) suitable for the food onto the bottom mold with an additional water-based mixture after the dough is shaped by placing to the bottom mold to prevent the dough from bonding to the mold after baking and to bond the bottom and top dough layers in a sealed way(12).

11. A bakery product according to Claim 1, wherein it is possible to close the bakery product gap by placing a particle before baking and to inject filling into the same product after baking.
